# EUROPÄISCHE PATENTSCHRIFT

(11) **EP 3 797 986 B1**
(45) Veröffentlichungstag und Bekanntmachung des Hinweises auf die Patenterteilung: **16.10.2024**
(21) Anmeldenummer: 20153409.6
(22) Anmeldetag: 23.01.2020
(51) Int. Cl.: B32B 7/027, B32B 3/06, B32B 3/30, B32B 5/02, B32B 5/14, B32B 5/18, B32B 7/05, B32B 7/09, B32B 7/14, G10K 11/168

(54) **VERBUNDWERKSTOFF ZUR THERMISCHEN ODER AKUSTISCHEN ISOLIERUNG**
COMPOSITE MATERIAL FOR THERMAL OR ACOUSTIC INSULATION
MATIÈRE COMPOSITE DESTINÉ À L'ISOLATION THERMIQUE OU ACOUSTIQUE

(30) Priorität: 26.09.2019 DE 102019125953
(43) Veröffentlichungstag der Anmeldung: 31.03.2021
(73) Patentinhaber: Cellofoam GmbH & Co. KG, 88400 Biberach (DE)
(72) Erfinder: Schmid, Torsten, 88483 Burgrieden (DE)
(74) Vertreter: Rings, Rolf

(56) Entgegenhaltungen:
- WO-A1-2019/014096
- DE-U1- 202019 100 429
- US-A1- 2005 115 662

## Beschreibung

Die vorliegende Erfindung betrifft einen Verbundwerkstoff zur Realisierung einer thermischen und/oder akustischen Isolierung in Fahrzeugen, Bauten, Anlagen oder ähnlichen Anwendungsbereichen, bei welchem eine zusätzliche Funktionsschicht als Drainagegebilde vorgesehen ist. Zur Schallisolierung oder zur thermischen Isolierung oder einer Kombination von beiden werden beispielsweise heutzutage in Schienenfahrzeugen, Flugzeugen oder Anlagen derartige Verbundwerkstoffe für die Zwecke der Isolierung eingesetzt. Die bisher verwendeten derartigen Verbundwerkstoffe weisen dabei mindestens ein Isolationsmaterial sowie in der Regel eine oder mehrere Funktionsschichten mit weiteren technischen Funktionen auf. Solche Verbundwerkstoffe werden herkömmlicherweise als ein plattenförmiges, im Wesentlichen flächiges Produkt oder als Rollenware bereitgestellt, wobei für die jeweilige Anwendungszwecke die Platten- oder die Rollenware entsprechend zugeschnitten und im Einsatzgebiet, beispielsweise einem Wand- oder Bodenbereich eines Schienenfahrzeuges, eingebaut werden.

Ein Problem bei derartigen Isolierungen ist, dass unterschiedliche, teils gegensätzliche technische Anforderungen gleichzeitig erfüllt werden müssen: So muss für eine gute thermische Isolierung der Verbundwerkstoff einen möglichst geringen Wärmeleitwert haben. Zudem muss eine gewisse mechanische Stabilität des Materials gegeben sein. Außerdem muss der Verbundwerkstoff für die Zwecke der Schallabsorption angepasst sein, d. h. eine möglichst gute akustische Isolierung ermöglichen. Nicht zuletzt ist in vielen derartigen Anwendungen, beispielsweise im Bereich von Schienenfahrzeugen oder Flugzeugen, außerdem noch eine hohe Hitzebeständigkeit bzw. Temperaturbeständigkeit in einem weiten Temperaturbereich erforderlich. Die derartigen Verbundwerkstoffe müssen auch den strengen Erfordernissen der Brandgefährdung in solchen Anwendungsbereichen genügen. in bestimmten Bereichen sind thermisch und akustisch hochwirksame Isoliermaterialien zur Erfüllung dieser Anforderungen eingesetzt worden. In manchen Anwendungsbereichen besteht jedoch die Gefahr, dass diese Eigenschaften stark beeinträchtigt werden aufgrund von Feuchtigkeit, Nässe oder anderen äußeren Einflüssen, die in bestimmten Umgebungen vorhanden sind.

Ein weiteres Problem derartiger Isolationsverfahren besteht darin, dass die Drainagegebilde der Funktionsschichten häufig aus einem Drahtgeflecht oder einem Kunststoffgebilde aus miteinander verknüpften, punktuell vorragenden Einzelfilamenten bestehen. Die vorragenden Stellen der Drähte oder des Kunststoffgeflechts führen aber dazu, dass sie nach einem Einbau in bestimmten Anwendungsbereichen an der Außenseite mit den angrenzenden Oberflächen in direkten Kontakt gelangen und eine Beschädigung von beispielsweise den Oberflächen, Lackierungen, Rostschutzbeschichten oder Ähnlichem hervorrufen können. Aus DE 20 2019 100 429 U1 ist ein Verbundwerkstoff für Isolationszwecke mit einem Isoliermaterial und einem daran angebrachten Abstandsgelege für die Zwecke einer Drainage von Feuchtigkeit an einer Anlagefläche des Verbundwerkstoffs bekannt. Das Abstandsgelege ist ein Flächenmaterial aus miteinander verknüpften oder verbundenen Kunststofffilamenten und wird an dem Isoliermaterial punktuell beispielsweise durch Verkleben oder durch Verschmelzen mit dem Material des Isoliermaterials fest verbunden. Die teilweise vorstehenden Enden und Knickstellen der Kunststofffilamente des Abstandsgeleges dienen einerseits der Befestigung an dem Isoliermaterial. Auf der gegenüberliegenden Seite ragen diese Stellen des Drainagegebildes ebenfalls punktuell vor.

WO 2019/014096 A1 betrifft eine Isolationsstruktur aus einer Matrix aus Kunststofffasern. Diese Kunststoffmatrix ist optional auf den beiden Außenseiten mit zusätzlichen Schichten versehen, welche beispielsweise als Klebeschicht, zusätzliche Isolationsschicht oder als Feuchtigkeitssperre (Dampfsperre) realisiert sein können.

US 2005/115662 A1 offenbart ein thermoakustisches Isolationsmaterial für den Einsatz in Fahrzeugen oder Gebäuden. Der Verbund umfasst im Wesentlichen zwei miteinander verbundene Vlieslagen und kann eine zusätzliche Schicht enthalten um Abrasion zu verringern, welche ein Textil, Papier oder eine Folie sein kann.

Vor diesem Hintergrund ist es die Aufgabe der vorliegenden Erfindung, einen solchen Verbundwerkstoff für eine Realisierung von thermischen und/oder akustischen Isolierungen in Fahrzeugen, Bauten oder Anlagen bereitzustellen, bei welchem nicht nur eine hohe Beständigkeit der Isolationseigenschaften bei auch feuchten Umgebungsbedingungen oder eindringenden äußeren Flüssigkeiten oder dergleichen gewährleistet ist, sondern zusätzlich eine Beschädigung von an der Außenseite angrenzenden Bauteilen, Lackierungen oder Beschichtungen möglichst vermieden wird.

Diese Aufgabe wird mit einem Verbundwerkstoff mit den Merkmalen des Anspruchs 1 gelöst. Vorteilhafte Ausgestaltungen und Weiterbildung der Erfindung sind Gegenstand der jeweils abhängigen Ansprüche.

Erfindungsgemäß wird nach Anspruch 1 ein Verbundwerkstoff zur Realisierung einer thermischen und/oder akustischen Isolierung in Fahrzeugen, Bauten oder Anlagen mit einer insbesondere flächigen plattenartigen Grundform vorgeschlagen, welcher mindestens ein Isolationsmaterial und mindestens eine mit dem Isolationsmaterial verbundene Funktionsschicht in Form eines Drainagegebildes umfasst, wobei das Drainagegebilde eine luft- und flüssigkeitsdurchlässige Schicht des Verbundwerkstoffs ausbildet, wobei das Isolationsmaterial ein Weichschaumstoff oder ein Volumenvlies auf Basis von insbesondere PET, PP, PANox, Baumwolle oder einem Gemisch davon umfasst, dadurch gekennzeichnet, dass das Drainagegebilde auf der zum Isolationsmaterial weisenden Seite uneben, insbesondere mit punktuell vorragenden Stellen oder Teilen zur Befestigung an dem Isolationsmaterial gebildet ist und auf der demgegenüber abgewandten Seite ein Mittel zum Scheuerschutz an der Außenseite des Verbundwerkstoffs aufweist. Ein erfindungsgemäß bereitgestelltes Isolationsmaterial in Form eines plattenförmigen Verbundwerkstoffs dient beispielsweise in einem Boden- oder Wandbereich von Schienenfahrzeugen zur thermischen Isolierung und Schallabsorption. Das Isolationsmaterial ist mit einem Drainagegebilde verbunden, welches an der Außenseite vorgesehen ist. Das Drainagegebilde hat den Vorteil, dass die Isolationseigenschaften langfristig gewährleistet werden, da eindringende Feuchtigkeit durch das Drainagegebilde verhindert wird. Ein direkter Kontakt des Isolationsmaterials mit den angrenzenden Wänden wie einem Boden- oder Deckenbereich eines Schienenfahrzeugs wird hierdurch verhindert. Das Isolationsmaterial ist als ein Weichschaumstoff oder als sogenanntes Volumenvlies vorgesehen, welches im Gegensatz zu einem Flachvlies eine gewisse Dicke aufweist: insbesondere können Dicken des Isolationsmaterials in Form eines Volumenvlieses in der Größenordnung von 10-100 mm vorgesehen werden, wobei eine Dickenmessung des Volumenvlieses mittels der Norm ISO 9073-2 erfolgt. Das Isolationsmaterial, welches so eine nicht unerhebliche Dicke aufweist, bietet eine ausreichende thermische Isolierung und auch eine gute Schallabsorption. An dem Volumenvlies direkt angebracht ist das Drainagegebilde gemäß der Erfindung welches einen retikulierten Schaumstoff umfasst und eine luft- und flüssigkeitsdurchlässige Schicht an einer Außenseite eines Verbundwerkstoffs zumindest einseitig bereitstellt. Die Erfindung ist dadurch gekennzeichnet, dass das Drainagegebilde auf der zum Isolationsmaterial weisenden Seite uneben gebildet ist, insbesondere mit punktuell vorragenden Stellen oder Teilen versehen ist, welche einer Befestigung an dem Isolationsmaterial dienen. Auch ist das Drainagegebilde auf der demgegenüber abgewandten Seite mit einem Mittel zum Scheuerschutz an der Außenseite des Verbundwerkstoffs versehen.

Somit lässt sich das Drainagegebilde mit lediglich punktuell vorgesehenen Verbindungsstel len an dem Isolationsmaterial ausreichend fest für eine Weiterverarbeitung anbringen. Die Mittel zum Scheuerschutz haben den Vorteil, dass durch das Drainagegebilde keine Beschädigung oder keine Kratzer an angrenzenden Bauteilen oder Schichten entstehen können. Beispielsweise wird so vermieden, dass an einer Rostschutzbeschichtung einer Wand oder eines Bodens in einem Zugwaggon durch das leichte Bewegen oder Vibrieren während der Nutzung des Fahrzeuges zu unerwünschten Beschädigungen führen. Erfindungsgemäß ist somit das Drainagegebilde mit zwei unterschiedlichen Seiten realisiert, nämlich einer Seite, an welcher vorragende Stellen oder unebene Flächen vorgesehen sind, die zur guten Befestigung am Isolationsmaterial dienen, und an einer demgegenüber liegend zweiten Seite, welche speziell mit einem Mittel zum Scheuerschutz gebildet ist. Ein solches Mittel zum Scheuerschutz kann unterschiedliche Formen aufweisen und entweder im Material des Drainagegebildes selbst oder in zusätzlichen Schichten oder Lagen von Materialien bestehen. Somit bietet der erfindungsgemäße Verbundwerkstoff eine besonders ausgestaltete Außenseite an der Seite des Drainagegebildes, welche gegenüber der normalerweise rauen oder unebenen Seite eine beispielsweise geglättete, abgeflachte oder mit anderen Scheuerschutzmitteln versehene Seite ausbildet.

Gemäß einem Aspekt der Erfindung ist das Mittel zum Scheuerschutz eine speziell abgeflachte Seite des Drainagegebildes, welche durch einseitiges Glätten oder Abflachen des Drainagegebildes mittels beheizter Walzen realisiert ist.

Der Vorteil ist, dass gegenüber einem Material mit der rauen Seite nach außen hin, beispielsweise zum Boden bei einer Anwendung in einem Fahrzeugboden eines Zugs oder dergleichen, die abgeflachte und damit glattere Seite einen direkten Scheuerschutz bietet. Der Untergrund, auf dem der Verbundwerkstoff eingebaut wird und zu liegen kommt, kann durch die abgeflachte und mit dem Scheuerschutzmittel versehene Seite des Drainagegebildes nicht unerwünscht verkratzt werden. Je nach Untergrund können nämlich solche Kratzer durch ein Verschieben oder Verlagern oder Vibrieren des Verbundwerkstoffs in der fortwährenden Nutzung dazu führen, dass eine etwaige Schutzschicht des Metalluntergrundes oder eine eloxierte Schutzschicht oder einen Rostschutzlack, beschädigt wird und der Metalluntergrund somit zu rosten beginnen kann. Mit der erfindungsgemäßen Lösung wird eine langfristige Beschädigung derartiger Rostschutzschichten durch Einsatz des vorteilhaften Verbundwerkstoffs von dem Fahrzeug vermieden. Eine längere Lebensdauer der Isolierung und Funktionsfähigkeit wird hierdurch gewährleistet. Jegliche oberflächliche Beschädigung oder Verkratzung von angrenzenden Bauteilen wird so mit der Erfindung effektiv mit konstruktiv überraschend einfachen Maßnahmen vermieden.

Gemäß einem weiteren vorteilhaften Aspekt der Erfindung ist als ein Mittel zum Scheuerschutz eine an dem Drainagegebilde angebrachte Schicht, wie eine Folie, Papier, Vlies oder Textil vorgesehen. Das Vlies oder die Folie kann auf dem Drainagegebilde angebracht werden und bietet ähnliche Vorteile wie die zuvor diskutierte abgeflachte Seite des Drainagegebildes. Ein Verkratzen oder Beschädigen von angrenzenden Bauteilen und insbesondere von Lackierungen oder Rostschutzschichten wird so sicher vermieden.

Gemäß der Erfindung umfasst das Drainagegebilde einen retikulierten Schaumstoff. Ein solcher retikulierter Schaumstoff hat den Vorteil, dass er durchlässig ist für Luft beziehungsweise Feuchtigkeit, jedoch gleichzeitig eine relativ gute Strukturstabilität bietet. Beispielsweise kann ein retikulierter Schaumstoff auf PU-Etherbasis vorgesehen werden, wobei auch hier eine raue Seite und eine glatte Seite des Drainagegebildes vorhanden sind. Die glatte Seite ist durch ein wie oben beschriebenes Mittel zum Scheuerschutz gebildet. Auch solch ein retikulierter Schaumstoff bietet eine unebene raue Seite, welche die oben genannten Vorteile für eine insbesondere nur lokal an bestimmten Punkten vorgesehene Befestigung mit dem Isolationsmaterial ermöglicht. An einer gegenüberliegenden Seite ist ein erfindungsgemäßer Scheuerschutz vorgesehen.

Gemäß einer vorteilhaften Ausgestaltung der Erfindung ist das Drainagegebilde an punktuellen Verbindungsstellen mit dem Isolationsmaterial lediglich lokal fest verbunden. Die punktuelle Verbindung an lokalen Stellen zwischen dem Isolationsmaterial und dem Drainagegebilde hat den Vorteil, dass nur die für die Weiterverarbeitung und die Montage notwendige Verbindung zwischen den einzelnen Bestandteilen gegeben ist. Außerdem wird nur ein vergleichsweise geringerer Aufwand bei der Herstellung der Verbindung benötigt. Beispielsweise sind mit einer Klebeverbindung oder einer anderen Art der Verbindung nur lokal der Kleber oder die Verbindungsmittel einzusetzen. Die Reduzierung auf lediglich lokal und punktuell festgelegt vorgesehene Klebestellen hat beispielsweise den Vorteil, dass die Brandlast des Materials nicht unnötig stark vergrößert wird. Eine gute Hitze- und Brandwiderstandsfähigkeit des Verbundwerkstoffs ist dadurch gewährleistet. Auch sind die Kosten der Herstellung dadurch deutlich reduziert.

Gemäß einer vorteilhaften Ausgestaltung der Erfindung ist das Drainagegebilde an den punktuellen Verbindungsstellen mit dem Isolationsmaterial durch Verschmelzen mit oder durch Einbetten in dem Isolationsmaterial verbunden. Ein Verschmelzen mit dem Isolationsmaterial kann beispielsweise dann erfolgen, wenn ein kunststoffbasiertes Isolationsmaterial verwendet wird, wie zum Beispiel ein Volumenvlies oder ein Weichschaumstoff. Es kann auch ein Weichschaumstoff auf Polyurethanschaumbasis als Isolationsmaterial verwendet werden. Das Verbinden kann durch einfaches Erhitzen beim Zusammenfügen der beiden Schichten (Drainagegebilde, Isolationsmaterial) oder lediglich einer der Schichten erfolgen. Durch ein Anschmelzen der Außenschicht des Isolationsmaterials werden die vorragenden Punkte des Drainagegebildes in dem Isolationsmaterial eingebettet und damit nach einem Abkühlen fest verbunden. Auch ein direktes Einbinden in einem Herstellungsprozess kann erfindungsgemäß in Betracht gezogen werden. Ein zusätzliches Befestigungsmaterial, wie ein Klebstoff oder dergleichen, ist ferner nicht notwendig. Dies reduziert deutlich die Herstellungskosten und bietet die Vorteile hinsichtlich einer vergleichsweise geringen Brandlast, einer einfachen Weiterverarbeitbarkeit und einer schnellen Realisierung der Verbindung.

Gemäß einer vorteilhaften weiteren Ausgestaltung der Erfindung ist das Drainagegebilde mit dem Isolationsmaterial an den punktuellen Verbindungsstellen durch ein Verkleben oder durch ein Vernähen mit dem Isolationsmaterial verbunden. Diese alternative Verbindungsmethode hat den Vorteil, dass die Erhitzung im Herstellungsprozess nicht unbedingt erforderlich ist. Die Verklebung kann so realisiert werden, dass lediglich an den vorragenden Stellen der Raumseite des Drainagegebildes der Klebstoff oder die Klebeschicht aufgebracht wird. Ein Erhöhen der Brandlast wird dadurch vermieden im Vergleich zu einem großflächigen Auftrag einer Klebeschicht. Mit dem Vernähen oder Verklammern lässt sich das Isolationsmaterial mit dem Drainagegebilde fest anbinden, wobei eine vorzeitige Ablösung des Drainagegebildes sicher vermieden wird.

Gemäß einer weiteren vorteilhaften Ausgestaltung der Erfindung ist an der dem Drainagegebilde abgewandten Seite des Verbundwerkstoffs eine zusätzliche Isolationsschicht, insbesondere eine Aluminiumfolie oder eine Dämmplatte, vorgesehen. Mit solch einem Verbundwerkstoff können weitere technische Funktionen bereitgestellt werden, wie zum Beispiel eine weiter vergrößerte Wärmedämmeigenschaft, eine Dampfsperre mittels einer Aluminiumfolie oder andere technische Eigenschaften wie einer Versteifung und strukturelle Stützung des Verbundwerkstoffs.

Weitere Vorteile, Merkmale und Aspekte der vorliegenden Erfindung werden in der nachfolgenden Beschreibung von Ausführungsbeispielen offenbart werden. Die Beschreibung der Ausführungsbeispiele erfolgt anhand der in den Zeichnungen dargestellten Ausführungsbeispiele, in welchen:

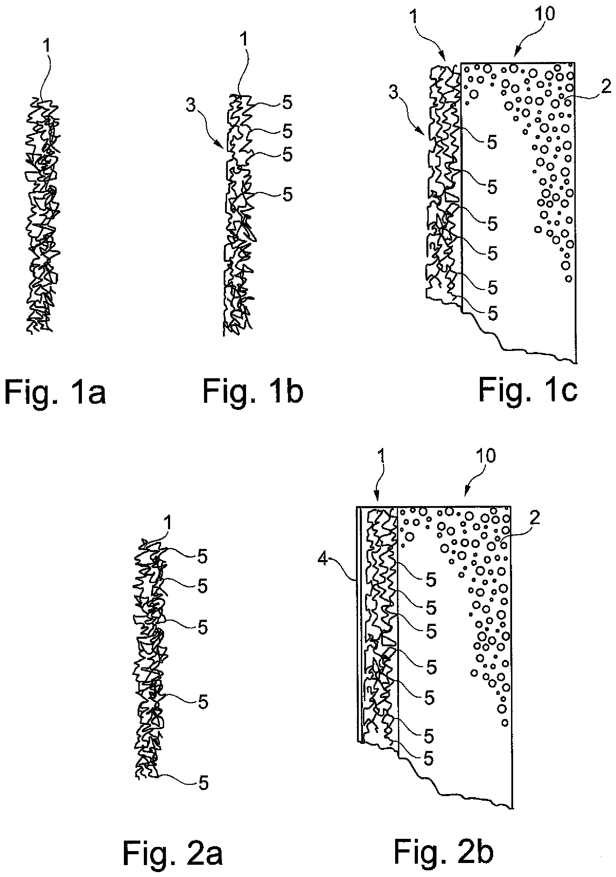

- Fig. 1a, 1b und 1c: schematische Seitenansichten eines ersten Ausführungsbeispiels eines erfindungsgemäßen Verbundwerkstoffs, wobei in Fig. 1a und 1b das Drainagegebilde in verschiedenen Herstellungsstufen zeigen und wobei Fig. 1c den Verbundwerkstoff im Zusammenhang mit dem Isolationsmaterial zeigt; und
- Fig. 2a und 2b: verschiedene schematische Ansichten eines zweiten Ausführungsbeispiels eines erfindungsgemäßen Verbundwerkstoffs zeigen, wobei Fig. 2a eine Detailansicht des Drainagegebildes ist und Fig. 2b eine Ansicht des fertiggestellten Verbundwerkstoffs mit Scheuerschutz gemäß der Erfindung ist.

Die Fig. 1a, Fig. 1b und Fig. 1c zeigen in verschiedenen schematischen Seitenansichten ein erstes Ausführungsbeispiel, verschiedene Herstellungsschritte sowie einen Verbundwerkstoff 10 gemäß der Erfindung. Bei diesem ersten Ausführungsbeispiel ist der Verbundwerkstoff 10 aus einem Isolationsmaterial 2 sowie einem damit verbundenen Drainagegebilde 1 zusammengesetzt. Der Verbundwerkstoff 10 kann weitere Schichten, Funktionsschichten oder Elemente enthalten, die in den Fig. 1a bis 1c nicht gezeigt sind. Der Verbundwerkstoff 10 gemäß der Erfindung dient einer thermischen und/oder akustischen Isolierung in Fahrzeugen, Bauten oder technischen Anlagen, beispielsweise in Schienenfahrzeugen oder Flugzeugen. Der Verbundwerkstoff 10 weist eine insgesamt flächige, plattenartige Grundform auf, d.h. er ist als plattenartiges Element oder als Rollenware für eine weitere Verwendung als Isolationsmaterial in verschiedenen Anwendungsgebieten direkt einsetzbar. Der Verbundwerkstoff 10 gemäß der Erfindung umfasst mindestens eine Schicht eines Isolationsmaterials 2, welche hier in Form eines Volumenvlieses vorliegt. Das Isolationsmaterial ist beispielsweise ein Volumenvlies auf Basis von insbesondere PET, PP, Baumwolle oder einem Gemisch davon. Das Isolationsmaterial kann beispielsweise ein Volumenvlies auf Basis eines Isolationswerkstoffs sein. Alternativ kann das Isolationsmaterial auch ein Weichschaumstoff auf Polyurethanschaumbasis sein, welcher ebenfalls gute thermische Isoliereigenschaften sowie eine deutliche Schallabsorption ermöglicht. Das Volumenvlies kann auch auf Basis eines PANox oder anderen derartigen Materialien sein, solange es eine thermische und/oder akustische Isolierung bereitstellt.

Erfindungsgemäß ist das lsolatioiismateria als ein Weichschaumstoff oder als ein Volumenvlies im Gegensatz zu einem Flächenvlies vorgesehen. Das heißt, das Isolationsmaterial weist eine gewisse Mindestdicke auf und ist nicht eine einfache, dünne Lage eines vliesförmigen Isolationswerkstoffs. Ein Volumenvlies lässt sich beispielsweise gemäß der Norm ISO 9073-2 als ein solches Vlies definieren, welches Dicken von einem Bereich von insbesondere 10 mm bis 100 mm umfassen kann. Die Dichte eines solchen Isolationsmaterials kann beispielsweise im Bereich von 10 bis 120 kg/m³ gemäß der Definition der Norm ISO 9073-1 liegen. Eine solche Dichte mit einem solchen Flächengewicht für Vliesstoffe ist vorteilhaft für die guten Wärmedämmungs- und Schallabsorptionseigenschaften.

Der Verbundwerkstoff 10 gemäß der Erfindung ist mit einem Drainagegebilde 1 versehen, welches an dem Isolationsmaterial angebracht ist, vorzugsweise über lokale punktuelle Verbindungsstellen 5. Das Drainagegebilde 1 umfasst einen retikulierten Schaumstoff.

Erfindungsgemäß wird das Drainagegebilde 1 mit dem Isolationsmaterial 2 fest verbunden an den lokalen Verbindungsstellen 5 der rauen Seite des Drainagegebildes 1. Dies kann beispielsweise durch eine punktuelle Verklebung, ein lokales Verschmelzen mit dem Isolationsmaterial 2 oder durch andere Verbindungstechniken, welche dem Fachmann des Gebietes bekannt sind, erfolgen.

Gemäß der Erfindung ist der Verbundwerkstoff 10 auf einer Seite des Drainagegebildes 1 mit einem Mittel 3, 4 zum Scheuerschutz versehen. Das Mittel 3, 4 zum Scheuerschutz ist an einer Außenseite des Verbundwerkstoffs 10 vorhanden, sodass die an der Seite des Drainagegebildes 1 liegende Außenseite gegenüber Beschädigungen aufgrund von vorragenden Stellen des Drainagegebildes abgedeckt und geschützt ist. Ein solches Mittel 3, 4 zum Scheuerschutz kann gemäß der Erfindung entweder eine gezielt abgeflachte Seite 3 wie bei dem ersten Ausführungsbeispiel gemäß Fig. 1b, Fig. 1c sein oder eine zusätzliche Schicht wie eine Folie oder ein Papier oder ein Vliesstoff, welche als Mittel 4 zum Scheuerschutz an der Außenseite des Drainagegebildes 1 angebracht ist (vgl. Fig. 2b, zweites Ausführungsbeispiel). Durch das Vorsehen eines solchen erfindungsgemäßen Mittels 3, 4 zum Scheuerschutz ist der Verbundwerkstoff 10 sowohl mit sehr guten langfristigen Isolationseigenschaften versehen. Eine Feuchtigkeit kann aufgrund des Drainagegebildes 1 nicht an das Isolationsmaterial 2 herangelangen. Ferner ist eine Beschädigung durch Anscheuern von angrenzenden Wänden oder Böden sicher vermieden. Der Scheuerschutz in Form einer abgeflachten Seite 3 an dem Drainagegebilde 1 oder in Form eines zusätzlich angebrachten Mittels 4, wie eine Folie, ein Papier, ein Vlies oder Textil, verhindert die Verkratzung und Beschädigung von beispielsweise Rostschutzschicht oder Lackierungen an angrenzenden Bauteilen.

Das Drainagegebilde 1 kann auch einen retikulierten Schaumstoff auf PU-Etherbasis umfassen. Ein solches Material ist beispielsweise ein hydrolysebeständiger retikulierter Schaumstoff mit zwei rauen Seiten mit 5-55 ppi. Bei solch einem Drainagegebilde 1 kann mit einem separaten Prozess eine einseitige glatte Schicht oder Seite bereitgestellt werden, um ein Mittel 3, 4 für einen Scheuerschutz zu bilden. Auch solch ein Drainagegebilde 1 aus retikuliertem Schaumstoff bietet die Funktion eines luft- und feuchtigkeitsdurchlässigen Bereichs an der Außenseite des Verbundwerkstoffs, wobei erfindungsgemäß ein Mittel 3, 4 für einen Scheuerschutz außen angebracht ist. Bei dieser Ausführungsform ist beispielsweise an der Außenseite des retikulierten Schaumstoffs eine Folie, ein Papier oder ein Vlies extra angebracht, was einen Schallschutz und eine glatte Außenseite des Verbundwerkstoffs 10 bildet.

Das Isolationsmaterial 2 gemäß der Erfindung ist ein Isolationsmaterial beispielsweise aus einem Weichschaumstoff oder einem Volumenvlies auf Basis von PET, PP, Baumwolle, PANox oder einem Gemisch davon. Verschiedene Formen von solchen Materialien, wie den Volumenvliesen, lassen sich für den Verbundwerkstoff 10 in Zusammenwirken mit dem Drainagegebilde 1 verwenden. Als Volumenvlies werden solche Vliesmaterialien bezeichnet, die eine gewisse Mindestdicke von etwa mehr als 10 mm, vorzugsweise Dicken von 10 mm bis 100 mm aufweisen (Methode Vliesdickenmessung gemäß ISO 9073-2). Solche Volumenvliese haben erfindungsgemäß beispielsweise eine Dichte von 10-120 kg/m³ (Flächengewicht an dem verwendeten möglichen Vliesstoff für das Volumenvlies gemäß Norm ISO 9073-1). Die Verwendung eines Isolationsmaterials kann entsprechend den jeweiligen Anwendungsfällen variieren, je nachdem, ob mehr eine thermische Isolierung oder eine akustische Absorption von Schall gewünscht ist. Ein hierzu vorteilhafter Werkstoff ist auch ein Melamin-Schaumstoff oder ein Volumenvlies mit einer öl- und wasserabweisenden Eigenschaft sowie mit einer hohen Temperaturbeständigkeit, beispielsweise zwischen -50°C und +150°C.

Die schematischen Seitenansichten der Fig. 2a und Fig. 2b zeigen ein zweites Ausführungsbeispiel eines erfindungsgemäßen Verbundwerkstoffs 10, wobei Fig. 2b den Verbundwerkstoff 10 als Ganzes und Fig. 2a lediglich das Drainagegebilde 1 gemäß der Erfindung zeigt, das an den punktuellen Verbindungsstellen 5 mit dem Isolationsmaterial 2 verbunden wird. Bei diesem zweiten Ausführungsbeispiel der Erfindung ist anstatt einer glatten oder geglätteten Seite als Mittel 3 zum Scheuerschutz eine Extraschicht in Form einer Folie 4 als Mittel zum Schallschutz 4 an der Außenseite des Drainagegebildes 1 angebracht. Eine solche zusätzliche Schicht kann in Form einer Folie 4, einem Papier, einem flächigen Vlies (im Gegensatz zum obigen Volumenvlies 2) oder einem Textilstoff sein. Die Außenseite des an sich vergleichsweise rauen Drainagegebildes (vgl. Fig. 2a) ist somit mit einem Mittel 4 zum Scheuerschutz gebildet, sodass insgesamt der Verbundwerkstoff 10 an der für die Montage dienenden Seite, nämlich der Seite des Drainagegebildes 1, mit einer glatten und ebenen Außenseite realisiert ist. Auch mit der alternativen Ausgestaltung werden die erfindungsgemäßen Vorteile erzielt. Gegenüber einem Verbundwerkstoff mit lediglich einer rauen Seite wird auf Seiten des Drainagegebildes nach außen hin, d.h. zu beispielsweise einem Boden bei der Anwendung an einem Fahrzeugboden, bietet die erfindungsgemäße Lösung eine glatte Seite als ein Mittel 3, 4 zum Scheuerschutz.

Der Untergrund, auf dem der Verbundwerkstoff 10 zu liegen kommt, kann durch die glatte Außenseite an der Seite des Drainagebildes 1 nicht zerkratzt werden. Je nach Untergrund können solche Kratzer in nachteiliger Weise dazu führen, dass eine Schutzschicht des Metalluntergrundes beschädigt wird und es zu einer Rostbildung auf dem Metalluntergrund kommt. Bei solchen Einbausituationen ist beispielsweise ein Metallboden oder eine Metallwand mit einer Rostschutzlackierung oder -grundierung oder einer eloxierten Schutzschicht versehen, die gegenüber den Scheuerbewegungen seitens des Verbundwerkstoffs 10 für die Zwecke der Isolierung anfällig für Beschädigungen sind. Diese Nachteile werden erfindungsgemäß in überraschend einfacher Weise vermieden. Die erfindungsgemäße Lösung bietet nicht nur vorteilhafte Aspekte hinsichtlich der thermischen Isolierung und der akustischen Abschottung, sondern auch eine Verbesserung hinsichtlich einer möglichst langfristigen Lebensdauer und eines langfristigen Zusammenwirkens mit angrenzenden Bauteilen in der Betriebssituation derartiger Fahrzeuge oder Anlagen.

Auch bei diesem zweiten Ausführungsbeispiel gemäß der Fig. 2a und 2b kann die Verbindung zwischen dem Isolationsmaterial 2 und dem Drainagegebilde 1 auf verschiedene Art und Weise erfolgen mit der im Wesentlichen rauen oder unebenen Seite des Drainagegebildes 1. An den punktuellen Verbindungsstellen 5 kann beispielsweise eine lokale Verklebung vorgesehen sein oder das Material des Isolationsmaterials 2 wird gezielt aufgeheizt und somit mit dem Drainagegebilde 1 quasi verschmolzen. Auch lassen sich weitere Verbindungsmethoden, wie z.B. eine Vernähung oder eine Verknüpfung oder eine Klammerbefestigung, realisieren, ohne dass die erfindungsgemäßen Vorteile beeinträchtigt werden. Das erfindungsgemäße Material eines Verbundwerkstoffs 10 ist beispielsweise in Form von Platten oder als Rollenware bereitgestellt und kann je nach Gegebenheiten an Ort und Stelle zugeschnitten werden. Das Material weist zusammen mit dem Drainagegebilde 1 die Isolationsschicht um das Isolationsmaterial 2 auf und hat zusätzlich gemäß der Erfindung den Vorteil, dass sie keine Verkratzungen oder Beschädigungen von angrenzenden Bauteilen erzeugt aufgrund des Mittels 3, 4 zum Scheuerschutz. Der Verbundwerkstoff 10 gemäß der Erfindung bietet somit zahlreiche vorteilhafte Einsatzmöglichkeiten auch in gegenüber Beschädigungen kritischen und anfälligen Einsatzbereichen.

Die Fig. 1a, Fig. 1b und Fig. 1c zeigen in verschiedenen schematischen Seitenansichten ein erstes Ausführungsbeispiel, verschiedene Herstellungsschritte sowie einen Verbundwerkstoff 10 gemäß der Erfindung. Bei diesem ersten Ausführungsbeispiel ist der Verbundwerkstoff 10 aus einem Isolationsmaterial 2 sowie einem damit verbundenen Drainagegebilde 1 zusammengesetzt. Der Verbundwerkstoff 10 kann weitere Schichten, Funktionsschichten oder Elemente enthalten, die in den Fig. 1a bis 1c nicht gezeigt sind. Der Verbundwerkstoff 10 gemäß der Erfindung dient einer thermischen und/oder akustischen Isolierung in Fahrzeugen, Bauten oder technischen Anlagen, beispielsweise in Schienenfahrzeugen oder Flugzeugen. Der Verbundwerkstoff 10 weist eine insgesamt flächige, plattenartige Grundform auf, d.h. er ist als plattenartiges Element oder als Rollenware für eine weitere Verwendung als Isolationsmaterial in verschiedenen Anwendungsgebieten direkt einsetzbar. Der Verbundwerkstoff 10 gemäß der Erfindung umfasst mindestens eine Schicht eines Isolationsmaterials 2, welche in Form eines Volumenvlieses vorliegt. Das Isolationsmaterial ist beispielsweise ein Volumenvlies auf Basis von insbesondere PET, PP, Baumwolle oder einem Gemisch davon. Das Isolationsmaterial kann beispielsweise ein Volumenvlies auf Basis eines Isolationswerkstoffs sein. Alternativ kann das Isolationsmaterial auch ein Weichschaumstoff auf Polyurethanschaumbasis sein, welcher ebenfalls gute thermische Isoliereigenschaften sowie eine deutliche Schallabsorption ermöglicht. Das Volumenvlies kann auch auf Basis eines PANox oder anderen derartigen Materialien sein, solange es eine thermische und/oder akustische Isolierung bereitstellt.

Erfindungsgemäß ist das Isolationsmaterial beispielsweise als ein Volumenvlies im Gegensatz zu einem Flächenvlies vorgesehen. Das heißt, das Isolationsmaterial weist eine gewisse Mindestdicke auf und ist nicht eine einfache, dünne Lage eines vliesförmigen Isolationswerkstoffs. Ein Volumenvlies lässt sich beispielsweise gemäß der Norm ISO 9073-2 als ein solches Vlies definieren, welches Dicken von einem Bereich von insbesondere 10 mm bis 100 mm umfassen kann. Die Dichte eines solchen Isolationsmaterials kann beispielsweise im Bereich von 10 bis 120 kg/m³ gemäß der Definition der Norm ISO 9073-1 liegen. Eine solche Dichte mit einem solchen Flächengewicht für Vliesstoffe ist erfindungsgemäß vorteilhaft für die guten Wärmedämmungs- und Schallabsorptionseigenschaften.

Der Verbundwerkstoff 10 gemäß der Erfindung ist ferner mit einem Drainagegebilde 1 versehen, welches an dem Isolationsmaterial angebracht ist, vorzugsweise über lokale punktuelle Verbindungsstellen 5.

Erfindungsgemäß wird das Drainagegebilde 1 mit dem Isolationsmaterial 2 fest verbunden an den lokalen Verbindungsstellen 5 der rauen Seite des Drainagegebildes 1. Dies kann beispielsweise durch eine punktuelle Verklebung, ein lokales Verschmelzen mit dem Isolationsmaterial 2 oder durch andere Verbindungstechniken, welche dem Fachmann des Gebietes bekannt sind, erfolgen.

Gemäß der Erfindung ist der Verbundwerkstoff 10 auf einer Seite des Drainagegebildes 1 mit einem Mittel 3, 4 zum Scheuerschutz versehen. Das Mittel 3, 4 zum Scheuerschutz ist an einer Außenseite des Verbundwerkstoffs 10 vorhanden, sodass die an der Seite des Drainagegebildes 1 liegende Außenseite gegenüber Beschädigungen aufgrund von vorragenden Stellen des Drainagegebildes abgedeckt und geschützt ist. Ein solches Mittel 3, 4 zum Scheuerschutz kann gemäß der Erfindung entweder eine gezielt abgeflachte Seite 3 wie bei dem ersten Ausführungsbeispiel gemäß Fig. 1b, Fig. 1c sein oder eine zusätzliche Schicht wie eine Folie oder ein Papier oder ein Vliesstoff, welche als Mittel 4 zum Scheuerschutz an der Außenseite des Drainagegebildes 1 angebracht ist (vgl. Fig. 2b, zweites Ausführungsbeispiel). Durch das Vorsehen eines solchen erfindungsgemäßen Mittels 3, 4 zum Scheuerschutz ist der Verbundwerkstoff 10 sowohl mit sehr guten langfristigen Isolationseigenschaften versehen. Eine Feuchtigkeit kann aufgrund des Drainagegebildes 1 nicht an das Isolationsmaterial 2 herangelangen. Ferner ist eine Beschädigung durch Anscheuern von angrenzenden Wänden oder Böden sicher vermieden. Der Scheuerschutz in Form einer abgeflachten Seite 3 an dem Drainagegebilde 1 oder in Form eines zusätzlich angebrachten Mittels 4, wie eine Folie, ein Papier, ein Vlies oder Ähnliches, verhindert die Verkratzung und Beschädigung von beispielsweise Rostschutzschicht oder Lackierungen an angrenzenden Bauteilen.

Das Drainagegebilde 1 kann einen retikulierten Schaumstoff auf PU-Etherbasis umfassen. Ein solches Material ist beispielsweise ein hydrolysebeständiger retikulierter Schaumstoff mit zwei rauen Seiten mit 5-55 ppi. Bei solch einem Drainagegebilde 1 kann mit einem separaten Prozess eine einseitige glatte Schicht oder Seite bereitgestellt werden, um ein Mittel 3, 4 für einen Scheuerschutz zu bilden. Auch solch ein Drainagegebilde 1 aus retikuliertem Schaumstoff bietet die Funktion eines luft- und feuchtigkeitsdurchlässigen Bereichs an der Außenseite des Verbundwerkstoffs, wobei erfindungsgemäß ein Mittel 3, 4 für einen Scheuerschutz außen angebracht ist. Bei dieser Ausführungsform ist beispielsweise an der Außenseite des retikulierten Schaumstoffs eine Folie, ein Papier oder ein Vlies extra angebracht, was einen Schallschutz und eine glatte Außenseite des Verbundwerkstoffs 10 bildet.

Das Isolationsmaterial 2 gemäß der Erfindung ist ein Isolationsmaterial beispielsweise aus einem Weichschaumstoff oder einem Volumenvlies auf Basis von PET, PP, Baumwolle, PANox oder einem Gemisch davon. Verschiedene Formen von solchen Materialien, wie den Volumenvliesen, lassen sich für den Verbundwerkstoff 10 in Zusammenwirken mit dem Drainagegebilde 1 verwenden. Als Volumenvlies werden solche Vliesmaterialien bezeichnet, die eine gewisse Mindestdicke von etwa mehr als 10 mm, vorzugsweise Dicken von 10 mm bis 100 mm aufweisen (Methode Vliesdickenmessung gemäß ISO 9073-2). Solche Volumenvliese haben erfindungsgemäß beispielsweise eine Dichte von 10-120 kg/m³ (Flächengewicht an dem verwendeten möglichen Vliesstoff für das Volumenvlies gemäß Norm ISO 9073-1). Die Verwendung eines Isolationsmaterials kann entsprechend den jeweiligen Anwendungsfällen variieren, je nachdem, ob mehr eine thermische Isolierung oder eine akustische Absorption von Schall gewünscht ist. Ein hierzu vorteilhafter Werkstoff ist auch ein Melamin-Schaumstoff oder ein Volumenvlies mit einer öl- und wasserabweisenden Eigenschaft sowie mit einer hohen Temperaturbeständigkeit, beispielsweise zwischen -50°C und +150°C.

Die schematischen Seitenansichten der Fig. 2a und Fig. 2b zeigen ein zweites Ausführungsbeispiel eines erfindungsgemäßen Verbundwerkstoffs 10, wobei Fig. 2b den Verbundwerkstoff 10 als Ganzes und Fig. 2a lediglich das Drainagegebilde 1 gemäß der Erfindung zeigt, das an den punktuellen Verbindungsstellen 5 mit dem Isolationsmaterial 2 verbunden wird. Bei diesem zweiten Ausführungsbeispiel der Erfindung ist anstatt einer glatten oder geglätteten Seite als Mittel 3 zum Scheuerschutz eine Extraschicht in Form einer Folie 4 als Mittel zum Schallschutz 4 an der Außenseite des Drainagegebildes 1 angebracht. Eine solche zusätzliche Schicht kann in Form einer Folie 4, einem Papier, einem flächigen Vlies (im Gegensatz zum obigen Volumenvlies 2) oder einem Textilstoff sein. Die Außenseite des an sich vergleichsweise rauen Drainagegebildes (vgl. Fig. 2a) ist somit mit einem Mittel 4 zum Scheuerschutz gebildet, sodass insgesamt der Verbundwerkstoff 10 an der für die Montage dienenden Seite, nämlich der Seite des Drainagegebildes 1, mit einer glatten und ebenen Außenseite realisiert ist. Auch mit der alternativen Ausgestaltung werden die erfindungsgemäßen Vorteile erzielt. Gegenüber einem Verbundwerkstoff mit lediglich einer rauen Seite wird auf Seiten des Drainagegebildes nach außen hin, d.h. zu beispielsweise einem Boden bei der Anwendung an einem Fahrzeugboden, bietet die erfindungsgemäße Lösung eine glatte Seite als ein Mittel 3, 4 zum Scheuerschutz.

Der Untergrund, auf dem der Verbundwerkstoff 10 zu liegen kommt, kann durch die glatte Außenseite an der Seite des Drainagebildes 1 nicht zerkratzt werden. Je nach Untergrund können solche Kratzer in nachteiliger Weise dazu führen, dass eine Schutzschicht des Metalluntergrundes beschädigt wird und es zu einer Rostbildung auf dem Metalluntergrund kommt. Bei solchen Einbausituationen ist beispielsweise ein Metallboden oder eine Metallwand mit einer Rostschutzlackierung oder -grundierung oder einer eloxierten Schutzschicht versehen, die gegenüber den Scheuerbewegungen seitens des Verbundwerkstoffs 10 für die Zwecke der Isolierung anfällig für Beschädigungen sind. Diese Nachteile werden erfindungsgemäß in überraschend einfacher Weise vermieden. Die erfindungsgemäße Lösung bietet nicht nur vorteilhafte Aspekte hinsichtlich der thermischen Isolierung und der akustischen Abschottung, sondern auch eine Verbesserung hinsichtlich einer möglichst langfristigen Lebensdauer und eines langfristigen Zusammenwirkens mit angrenzenden Bauteilen in der Betriebssituation derartiger Fahrzeuge oder Anlagen.

Auch bei diesem zweiten Ausführungsbeispiel gemäß der Fig. 2a und 2b kann die Verbindung zwischen dem Isolationsmaterial 2 und dem Drainagegebilde 1 auf verschiedene Art und Weise erfolgen mit der im Wesentlichen rauen oder unebenen Seite des Drainagegebildes 1. An den punktuellen Verbindungsstellen 5 kann beispielsweise eine lokale Verklebung vorgesehen sein oder das Material des Isolationsmaterials 2 wird gezielt aufgeheizt und somit mit dem Drainagegebilde 1 quasi verschmolzen. Auch lassen sich weitere Verbindungsmethoden, wie z.B. eine Vernähung oder eine Verknüpfung oder eine Klammerbefestigung, realisieren, ohne dass die erfindungsgemäßen Vorteile beeinträchtigt werden. Das erfindungsgemäße Material eines Verbundwerkstoffs 10 ist beispielsweise in Form von Platten oder als Rollenware bereitgestellt und kann je nach Gegebenheiten an Ort und Stelle zugeschnitten werden. Das Material weist zusammen mit dem Drainagegebilde 1 die Isolationsschicht um das Isolationsmaterial 2 auf und hat zusätzlich gemäß der Erfindung den Vorteil, dass sie keine Verkratzungen oder Beschädigungen von angrenzenden Bauteilen erzeugt aufgrund des Mittels 3, 4 zum Scheuerschutz. Der Verbundwerkstoff 10 gemäß der Erfindung bietet somit zahlreiche vorteilhafte Einsatzmöglichkeiten auch in gegenüber Beschädigungen kritischen und anfälligen Einsatzbereichen.

## Patentansprüche

1. Verbundwerkstoff (10) zur Realisierung einer thermischen und/oder akustischen Isolierung in Fahrzeugen, Bauten oder Anlagen mit einer insgesamt flächigen plattenartigen Grundform umfassend mindestens ein Isolationsmaterial (2) und mindestens eine mit dem Isolationsmaterial (2) verbundene Funktionsschicht in Form eines Drainagegebildes (1), wobei das Drainagegebilde (1) eine luft- und flüssigkeitsdurchlässige Schicht des Verbundwerkstoffs (10) ausbildet, wobei das Isolationsmaterial (2) ein Weichschaumstoff oder ein Volumenvlies auf Basis von insbesondere PET, PP, PA-Nox, Baumwolle oder einem Gemisch davon umfasst, **dadurch gekennzeichnet, dass**
das Drainagegebilde (1) auf der zum Isolationsmaterial (2) weisenden Seite uneben, insbesondere mit punktuell vorragenden Stellen oder Teilen zur Befestigung an dem Isolationsmaterial (2) gebildet ist und auf der demgegenüber abgewandten Seite ein Mittel (3, 4) zum Scheuerschutz in Form einer speziell abgeflachten Seite (3) des Drainagegebildes (1) an der Außenseite des Verbundwerkstoffs (10) aufweist, welche durch einseitiges Glätten oder Abflachen des Drainagegebildes (1) mittels beheizter Walzen realisiert ist, oder das Mittel zum Scheuerschutz eine an dem Drainagegebilde (1) angebrachte Schicht, wie eine Folie (4), Papier, Vlies oder Textil ist, und dass das Drainagegebilde (1) einen retikulierten Schaumstoff umfasst.

2. Verbundwerkstoff (10) nach Anspruch 1, **dadurch gekennzeichnet, dass** das Drainagegebilde (1) an punktuellen Verbindungsstellen (5) mit dem Isolationsmaterial (2) lediglich lokal fest verbunden ist.

3. Verbundwerkstoff (10) nach Anspruch 2, **dadurch gekennzeichnet, dass** das Drainagegebilde (1) an den punktuellen Verbindungsstellen (5) mit dem Isolationsmaterial (2) durch Verschmelzen oder durch Einbetten mit/in dem Isolationsmaterial (2) verbunden ist.

4. Verbundwerkstoff (10) nach Anspruch 2, **dadurch gekennzeichnet, dass** das Drainagegebilde (1) an den punktuellen Verbindungsstellen (5) mit dem Isolationsmaterial (2) durch Verkleben oder Vernähen mit dem Isolationsmaterial (2) verbunden ist.

5. Verbundwerkstoff (10) nach einem der vorangegangenen Ansprüche, **dadurch gekennzeichnet, dass** an der dem Drainagegebilde (1) abgewandten Seite des Verbundwerkstoffs (10) eine zusätzliche Isolationsschicht, insbesondere eine Aluminiumfolie oder eine Dämmplatte, vorgesehen ist.

## Claims

1. Composite material (10) for providing thermal and/or acoustic insulation in vehicles, buildings or installations having an overall flat plate-like basic shape comprising at least one insulating material (2) and at least one functional layer in the form of a drainage structure (1) connected to the insulating material (2), wherein the drainage structure (1) forms an air-permeable and liquid-permeable layer of the composite material (10), wherein the insulating material (2) comprises a flexible foam or a voluminous nonwoven fabric made in particular from PET, PP, PA-Nox, cotton or a mixture thereof, **characterized in that** the drainage structure (1) is formed unevenly on the side facing the insulating material (2), in particular with locally protruding areas or parts for attachment to the insulating material (2), and on the side facing away from it has a means (3, 4) for abrasion protection in the form of a specially flattened side (3) of the drainage structure (1) on the outside of the composite material (10), which is achieved by single-sided smoothing or flattening of the drainage structure (1) by means of heated rollers, or the means for abrasion protection is a layer attached to the drainage structure (1), such as a film (4), paper, nonwoven material or textile, and **in that** the drainage structure (1) comprises a reticulated foam.

2. Composite material (10) according to Claim 1, **characterized in that** the drainage structure (1) is only locally fixedly connected to the insulating material (2) at localized connection points (5).

3. Composite material (10) according to Claim 2, **characterized in that** the drainage structure (1) is connected to the insulating material (2) at the localized connection points (5) by fusing or by embedding with/in the insulating material (2).

4. Composite material (10) according to Claim 2, **characterized in that** the drainage structure (1) is connected to the insulating material (2) at the localized connection points (5) by bonding or sewing to the insulating material (2).

5. Composite material (10) according to one of the preceding claims, **characterized in that** an additional insulating layer, in particular an aluminium foil or an insulating board, is provided on the side of the composite material (10) facing away from the drainage structure (1).

## Revendications

1. Matériau composite (10) pour la réalisation d'une isolation thermique et/ou acoustique dans des véhicules, des constructions ou des installations avec une forme de base globalement plate en forme de plaque comprenant au moins un matériau isolant (2) et au moins une couche fonctionnelle reliée au matériau isolant (2) sous forme d'une structure de drainage (1), la structure de drainage (1) formant une couche perméable à l'air et aux liquides du matériau composite (10), le matériau isolant (2) comprenant une mousse souple ou un non-tissé volumique à base notamment de PET, PP, PA- Nox, coton ou un mélange de ceux-ci, **caractérisé en ce que** la structure de drainage (1) est formée sur le côté orienté vers le matériau isolant (2) de manière inégale, en particulier avec des points ou des parties en saillie pour la fixation sur le matériau isolant (2) et présente sur le côté opposé à celui-ci un moyen (3, 4) pour la protection contre le frottement sous la forme d'un côté (3) spécialement aplati de la structure de drainage (1) sur le côté extérieur du matériau composite (10), où le moyen de protection contre le frottement est une couche appliquée sur la structure de drainage (1), telle qu'une feuille (4), du papier, un non-tissé ou un textile, et **en ce que** la structure de drainage (1) comprend une mousse réticulée.

2. Matériau composite (10) selon la revendication 1, **caractérisé en ce que** la structure de drainage (1) est reliée localement et solidement au matériau isolant (2) en des points de liaison ponctuels (5).

3. Matériau composite (10) selon la revendication 2, **caractérisé en ce que** la structure de drainage (1) est liée aux points de liaison ponctuels (5) avec le matériau isolant (2) par fusion ou par enrobage avec/dans le matériau isolant (2).

4. Matériau composite (10) selon la revendication 2, caractérisé en la structure de drainage (1) est reliée au matériau isolant (2) au niveau des points de liaison ponctuels (5) par collage ou par couture avec le matériau isolant (2).

5. Matériau composite (10) selon l'une quelconque des revendications précédentes, **caractérisé en ce qu'**une couche isolante supplémentaire, en particulier une feuille d'aluminium ou une plaque isolante, est prévue sur le côté du matériau composite (10) opposé à la structure de drainage (1).
